Europäisches Patentamt

(19) European Patent Office

Office européen des brevets

(11) Numéro de publication: **0 214 877**
**A1**

(12) **DEMANDE DE BREVET EUROPEEN**

(21) Numéro de dépôt: 86401556.5

(22) Date de dépôt: 11.07.86

(51) Int. Cl.⁴: **B 62 B 5/02**
**B 60 B 33/00**

(30) Priorité: 12.07.85 FR 8511125

(43) Date de publication de la demande:
18.03.87 Bulletin 87/12

(84) Etats contractants désignés:
AT BE CH DE GB IT LI LU NL SE

(71) Demandeur: MIDI ROBOTS, Société Anonyme
20, Rue des Frères-Lumière Zone Artisanale Nord
F-31520 Ramonville-Saint-Agne(FR)

(72) Inventeur: Wallart, Jean-Pierre
Massegat
F-31290 Avignonet(FR)

(74) Mandataire: Morelle, Guy Georges Alain
SC Morelle & Bardou 1, Avenue de Rangueil
F-31400 Toulouse(FR)

(54) Dispositif de guidage notamment pour engin du type robot muni de roues.

(57) La présente invention concerne un dispositif de guidage notamment pour engin du type robot apte à se déplacer sur un sol.

Le dispositif se caractérise essentiellement par le fait qu'il comprend:

un support (20) ayant un premier axe de rotation (22),

une roulette (23) montée rotative sur ledit support (20) suivant un deuxième axe (25) pour coopérer par roulement sur ledit sol (4) et ayant un rayon de valeur r,

un secteur (27) d'un disque de forme généralement sensiblement circulaire ayant un rayon de valeur R, monté rotatif sur ledit support (20) au moyen d'un troisième arbre (28) suivant un troisième axe (29), ledit troisième axe étant sensiblement parallèle audit deuxième axe (25), la distance séparant deux plans parallèles et passant par lesdits deuxième et troisième axes ayant une valeur supérieure à la différence entre les deux valeurs R et r, la distance séparant ces deux deuxième et troisième axes étant inférieure à R, R étant au moins égal à la distance séparant le troisième axe (29) d'une droite contenue le plan passant par ledit deuxième axe (25), et passant par le bord de roulement (123) de la roulette, le secteur ayant au moins un coin (34), (36) en dehors du cylindre enveloppant ladite roulette.

Application : pour faciliter le déplacement des robots sur des surfaces faiblement accidentées.

fig. 2

—

La présente invention concerne les dispositifs de guidage et roulage d'engins tels que plate-forme robotisée ou non robotisée.

Actuellement, il existe tout un ensemble d'engins aptes à se déplacer dans des milieux qui ne sont pas absents de tous obstacles. Généralement, ces engins sont du genre robot, plus ou moins sophistiqués, qui sont appelés à réaliser différentes fonctions, comme par exemple du nettoyage, de l'entretien, des travaux de mécanique, de logistique, de recherche, etc...

Pour pouvoir se déplacer, et éviter les obstacles, ces engins possèdent des capteurs, par exemple à ultra-sons, qui permettent de déterminer les obstacles qu'il peuvent rencontrer dans leur déplacement.

En fait, on constate que, pour l'ensemble de ces engins, les obstacles qu'ils peuvent très facilement détecter sont infranchissables par eux car relativement hauts par rapport à la taille de ces engins. Ceux-ci sont donc obligés de contourner ces obstacles.

Par contre, aucun de ces engins ne donne vraiment satisfaction lorsqu'il s'agit de détecter des obstacles qui sont relativement bas, comme par exemple des marches de faible hauteur. Il est donc préférable de les surmonter.

Pour pouvoir passer sur ces obstacles relativement bas, il est impératif que l'engin possède des roues de relativement grand diamètre. Ceci est possible, généralement, pour les roues motrices. Par contre, pour que ces engins du type robot puissent se déplacer et se diriger eux-mêmes sans difficulté, il est nécessaire qu'ils possèdent d'autres roues de très petite dimension pour des raisons d'encombrement, roues qui sont généralement situées à l'avant.

Dans ce cas, le rayon de ces roues est tel que, quand elles rencontrent un obstacle du type "marche", même de très faible hauteur, elles viennent buter contre lui et ne peuvent en aucune façon le surmonter. Comme l'engin est généralement incapable de détecter un tel obstacle, du fait de sa faible hauteur, il ne peut le contourner. Il lui arrive alors d'être immobilisé. Cet inconvénient constitue une limitation dans l'utilisation des engins du type robot.

0214877

Aussi, la présente invention a-t-elle pour but de pallier, du moins dans une certaine limite, l'inconvénient mentionné ci-dessus, en proposant de réaliser une roulette de guidage, notamment pour engin du type robot, qui permette de surmonter des obstacles comme définis ci-dessus, sans pour autant faire appel à des techniques compliquées ou onéreuses.

Plus précisément, la présente invention a pour objet un dispositif de guidage pour un engin destiné à se déplacer sur un sol pouvant comporter des obstacles de relativement faible hauteur, caractérisé par le fait qu'il comprend :

- un support, ledit support comportant un premier arbre ayant un premier axe de rotation,

- au moins une roulette montée rotative sur ledit support au moyen d'un second arbre de rotation suivant un deuxième axe sensiblement perpendiculaire au dit premier axe, ladite roulette étant associée au dit support pour pouvoir coopérer par roulement sur ledit sol et ayant un rayon de valeur r,

- un secteur d'un disque de forme généralement sensiblement circulaire ayant un rayon de valeur R, ledit secteur étant monté rotatif sur ledit support au moyen d'un troisième arbre suivant un troisième axe, ledit troisième axe étant sensiblement parallèle au dit deuxième axe, la distance séparant deux plans sensiblement parallèles à la surface générale du sol et passant respectivement par lesdits deuxième et troisième axes ayant une valeur supérieure à la différence des valeurs des deux dits rayons R et r, la distance séparant ces deux deuxième et troisième axes étant inférieure à la valeur du rayon R du dit secteur, la valeur du rayon R étant au moins égale à la distance séparant le troisième axe et une droite contenue dans le plan des deux dits plans et passant par ledit deuxième axe, d'une part, et passant par le bord de roulement de ladite roulette, d'autre part, et ledit secteur ayant une valeur d'angle au centre pour qu'au moins un des deux coins du secteur définis par l'intersection des côtés de l'angle au centre et de la partie circulaire soit en dehors du cylindre enveloppant ladite roulette.

D'autres caractéristiques et avantages de la présente invention apparaîtront au cours de la description suivante donnée en regard de dessins annexés à titre illustratif mais nullement limitatif, dans lesquels :

- la Figure 1 représente sous forme schématique un dispositif de guidage et de roulement en association avec un engin du type robot,

- la Figure 2 représente un mode de réalisation d'un dispositif de guidage selon l'invention,

- les Figures 3A, B et C représentent des schémas explicatifs permettant de comprendre le fonctionnement du dispositif quand il monte sur une marche de faible hauteur et,

- les Figures 4A et B représentent des schémas explicatifs permettant de comprendre le fonctionnement du dispositif quand il descend d'une marche de faible hauteur.

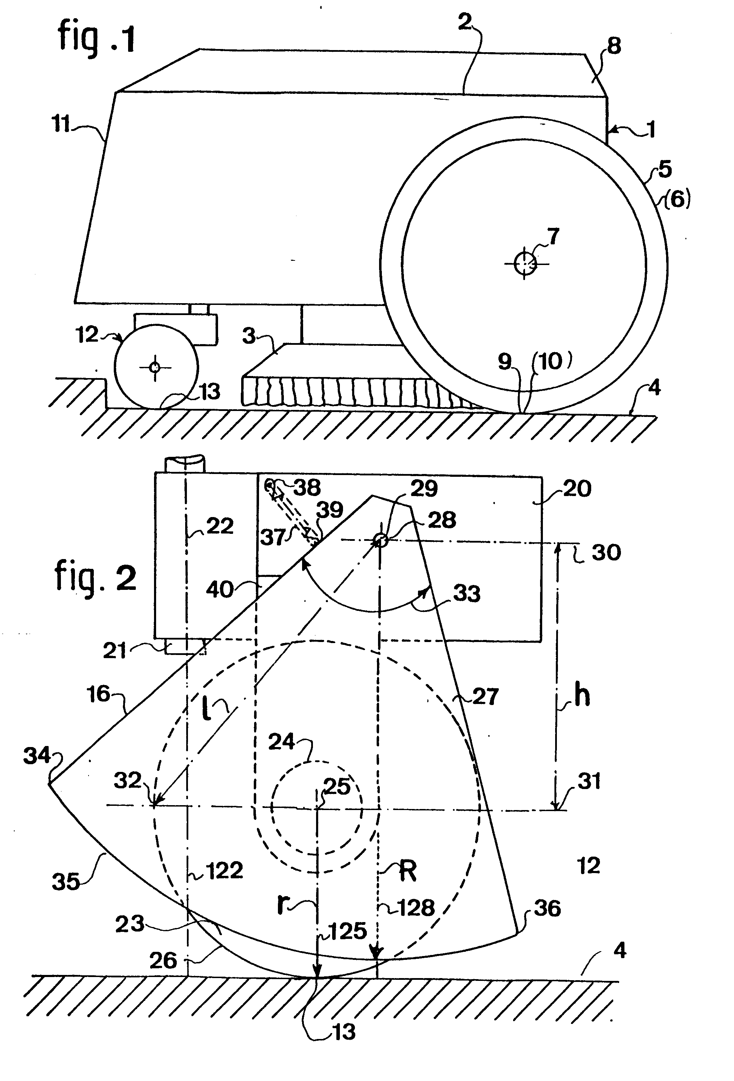

En revenant plus particulièrement à la Figure 1, celle-ci représente sous forme relativement simplifiée un robot 1, par exemple de nettoyage, constitué d'un caisson 2 dans lequel est disposé tout un ensemble de moyens permettant, par exemple, la conduite du robot, la commande du nettoyage, la détection des obstacles hauts, etc...

Ce caisson 2 supporte, par exemple, une bouche d'aspiration 3 pour effectuer le nettoyage, par exemple du sol.

A ce caisson 2 sont associés des moyens pour lui permettre de se déplacer et se diriger sur le sol 4. Ces moyens sont constitués essentiellement par exemple de deux grandes roues 5 et 6 solidaires d'un essieu de roulement 7 qui est généralement couplé avec un moteur d'entraînement, par exemple électrique alimenté par des batteries, ces deux derniers éléments étant enfermés dans le caisson. Les deux roues 5 et 6 ayant un grand diamètre, elles sont généralement situées de chaque côté du caisson pour ménager leur passage, d'une part, et assurer au robot une bonne stabilité, d'autre part. Ces deux roues 5 et 6 sont situées à l'arrière 8 du caisson 2, pour assurer deux points de contact 9 et 10 avec le sol 4. A l'avant 11 du caisson 2 est situé un dispositif de guidage et roulement 12 prenant appui sur le sol 4 en un point 13, ce point 13 définissant avec les deux autres 9 et 10 un triangle de sustentation au centre duquel est situé la bouche d'aspiration 3.

Ce dispositif de guidage et de roulement 12 est illustré sur la Figure 2.

Ce dispositif comprend un support 20 sur lequel est monté un arbre de rotation 21 apte à pivoter autour d'un axe de rotation 22 qui a une direction perpendiculaire à la direction générale du sol 4 qui est définie de façon visuelle comme sensiblement horizontale, bien que celui-ci puisse comporter des obstacles, comme par exemple des marches, ou équivalents, de faible hauteur.

Ce support en forme de T supporte une roulette 23 qui est montée sur un arbre de rotation 24 suivant un axe de rotation 25 qui a une direction perpendiculaire à la première direction 22 de l'arbre 21. De préférence, pour assurer une bonne conduite, la position de l'axe 25 est excentrée de l'axe 22, pour que, sous les différents efforts, le support 20 avec la roulette 23 puisse pivoter autour de l'axe 22, tout en restant en contact au point 13 avec le sol 4. Dans ce qui suit, il est supposé que la roulette 23 a une forme de cylindre de révolution 26 de rayon r.

Le dispositif comprend, en plus, au moins un secteur 27 monté rotatif

0214877

sur le support 20 par un arbre 28 suivant un axe 29 sensiblement parallèle à l'axe 25. Ce secteur est positionné parallèlement et à proximité du plan de la roulette 23. Le secteur 27 est avantageusement de forme circulaire et de rayon R.

Ainsi, le secteur 27 est associé au support 20 et coopère avec la roulette dans les conditions structurelles suivantes. Les axes 29 et 25 sont disposés l'un par rapport à l'autre, de façon que :

- la distance h séparant deux plans 30 et 31 sensiblement parallèles à la surface générale du sol 4 en passant respectivement par les axes 28 et 29 ait une valeur supérieure à la différence entre les valeurs des deux rayons R et r,

- la distance séparant ces deux axes soit, elle, inférieure à la valeur R du rayon du secteur, la valeur R étant au moins égale à la distance "l" séparant l'axe de rotation 28 et la droite 32 qui est définie par l'intersection du plan 31 défini ci-dessus avec la surface cylindrique 26 enveloppant la roulette 23.

Enfin, le secteur 27 est choisi avantageusement pour qu'il ait une valeur d'angle au centre 33 de façon que le secteur ait un coin 34 en dehors de la surface cylindrique 26 enveloppante de la roulette, le coin 34 étant l'intersection de la surface cylindrique 35 du secteur et du côté 16.

Dans un mode de réalisation, encore plus avantageux, les deux coins, c'est-à-dire le coin 34 et l'autre coin 36 défini de la même façon que pour le coin 34, sont situés en dehors de la surface cylindrique 26, le coin 34 situé vers l'avant (11 pour le robot) étant à un niveau sensiblement le même que celui du plan 31 défini ci-avant, et de préférence au dessus de ce plan 31.

De plus, le secteur circulaire 27 est associé à des moyens formant une force élastique tendant à maintenir le coin 34 à un niveau le plus haut par rapport à ce plan 31. Ces moyens sont constitués par un ressort 37 dont une extrémité 38 est fixée sur le support 20, tandis que l'autre extrémité 39 est fixée au secteur 27, la position la plus haute du coin 34 étant obtenue par une butée 40 solidaire du support 20 contre laquelle vient buter le côté 16 sous l'action du ressort 37 si, bien entendu, le secteur 27 n'est pas soumis à d'autres forces, comme il sera explicité ci-après.

Dans un mode avantageux de réalisation, les trois axes 22, 25 et 29 appartiennent respectivement à trois plans 122, 125 et 128 non confondus perpendiculaires à la surface générale du sol 4 sur lequel est amenée à se déplacer la roulette. Le plan 125 passant par l'axe 25 de la roulette est situé entre les deux autres plans 122 et 128 et les deux plans 122 et 128 sont suffisamment éloignés l'un de l'autre sur le support 20.

En conséquence, un système de guidage et de roulement comme décrit ci-dessus, en association avec un engin comme un robot 1, permet de franchir des obstacles comme des marches de faible hauteur par rapport au sol, hauteur maximale de l'ordre du rayon r de la roulette.

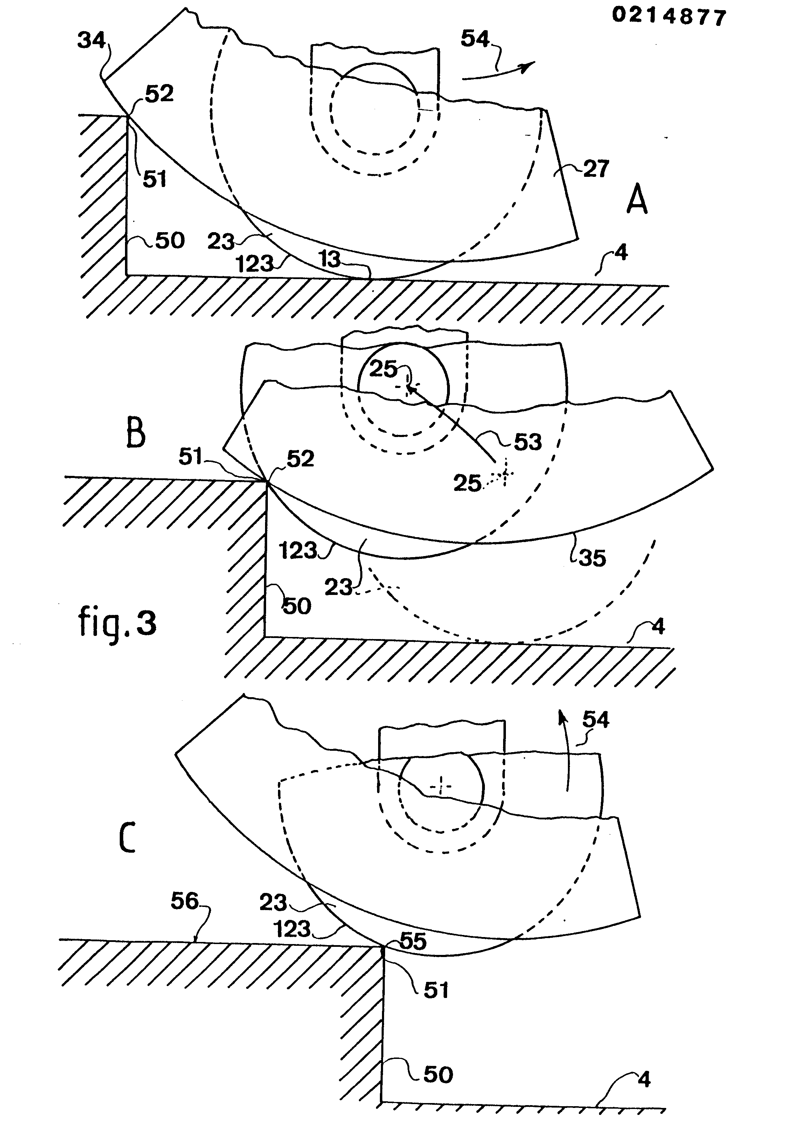

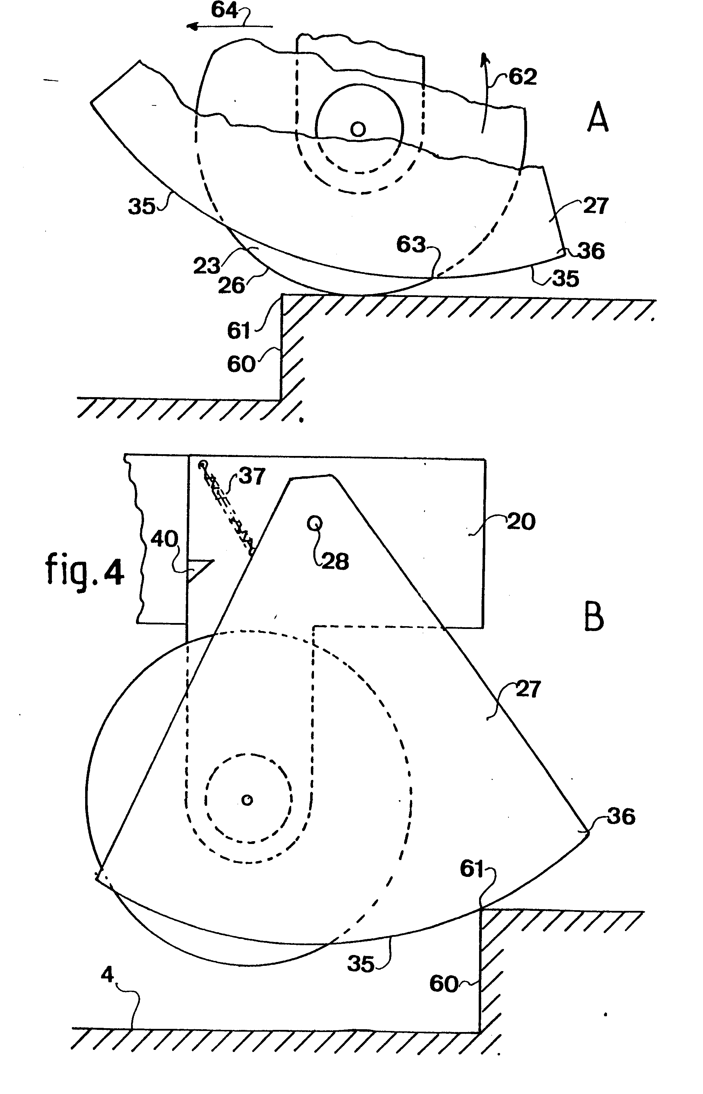

Le dispositif fonctionne donc de la façon suivante et ce fonctionnement sera explicité en regard des Figures 3A, B et C, dans le cas où la roulette 23 doit monter une marche, et des Figures 4A et B, dans le cas où elle doit descendre une marche. Bien entendu, les Figures représentant un même mode de réalisation, les mêmes références désigneront les mêmes moyens.

En revenant plus particulièrement à la Figure 3, celle-ci représente les différentes phases et positions du dispositif de guidage et de roulement 12, lorsque la roulette 23 doit monter une marche 50 ayant une hauteur sensiblement égale à la valeur du rayon r de la roulette 23. Le robot 1 est mû par un moteur électrique couplé aux roues 5 et 6, la roulette 23 n'étant là que pour guider et diriger le robot 1. Quand le robot se déplace sur le sol 4 et rencontre une marche 50 telle que définie ci-dessus, le secteur circulaire 27 vient buter par sa surface cylindrique 35 sur le bord 51 de la marche 50. Comme le robot continue à être soumis à sa force d'avancement procurée par le moteur couplé aux grandes roues 5 et 6, la force qui s'exerce sur la tranche circulaire 35 du secteur 27 se décompose essentiellement en deux forces, une force axiale passant par l'axe 29 défini ci-dessus, et une deuxième force tangente à la tranche du secteur 35 qui, elle, n'est pas d'une intensité très importante, du fait de la valeur R du rayon de ce secteur 27. Dans ce cas, sous l'effort transmis au support 20 par l'arbre 21, le secteur, à l'encontre de la force exercée par le ressort 37, se met à subir une rotation senestrorsum 54 sous l'action de la poussée des roues motrices 5 et 6.

Pendant ce temps, le bord 51 de la marche 50 reste en contact avec le même point 52 de la tranche 35. De ce fait, le secteur subit une rotation autour de ce point 52 et entraîne un déplacement angulaire de l'axe 29 qui subit une élévation qui entraîne dans ce même mouvement d'élévation la roulette 23 qui décolle ainsi du sol 4 en son point de roulement 13 défini précédemment. La Figure 3A représente l'instant où le secteur 27 vient buter contre le bord 51 de la marche 50. La Figure 3B représente le déplacement vertical de la roulette lorsque, sous l'action de la force procurée par les deux roues 5 et 6, elle subit une élévation due à la rotation du secteur autour du point 52, à l'encontre bien entendu de la force exercée par le ressort 37.

Lorsque le support a subi une élévation et une translation illustrées par la flèche 53, la bande de roulement 123 de la roulette 23 vient elle-même buter contre le bord 51 de la marche 50. Mais, dans ce cas, le point de contact de la roulette 23 avec le bord 51 de la marche 50 est à une position

0214877

relativement proche du point le plus bas de la roulette 23. Alors, dans ce cas, le problème est ramené à ce qu'une roulette de faible diamètre puisse monter une marche de très faible hauteur par rapport à son rayon r. Sous l'action de l'effort exercé par les roues motrices 5 et 6, la roulette peut prendre le relais du secteur 27 et elle-même se déplacer par son point de contact 55 sur le bord 51 de la marche 50, de façon que, dans son mouvement de rotation senestrorsum 54, elle puisse venir sur le sommet 56 de la marche. En effet, une fois que la roulette a pris contact par son point 55 sur le bord 51 de la marche 50, le secteur 27, sous l'action de la force exercée par le ressort de traction 37, revient dans la position origine telle que représentée sur la Figure 3A, c'est-à-dire le côté 16 contre la butée 40.

Bien entendu, du fait de la grande dimension des roues motrices 5 et 6, celles-ci pourront aisément surmonter et passer la marche 50, puisque celle-ci a une très faible hauteur par rapport à leur rayon.

On voit donc qu'avec un tel dispositif de guidage, du fait de l'existence du secteur 27 d'un rayon R très nettement supérieur au rayon r de la roulette 23, il est possible de passer une marche d'une hauteur voisine de la valeur r du rayon de cette roulette, cette opération s'effectuant, au cours d'une première étape, grâce au secteur circulaire 27 qui joue momentanément le rôle d'une roue de grand diamètre, pour rehausser le niveau avant 11 du robot 1, afin que la roulette 23 puisse coopérer avec le sommet 56 de la marche et permette ainsi au robot de passer cette marche. Bien entendu, un tel fonctionnement ne pourra avoir lieu que si le coin 34 du secteur circulaire 27 est supérieur au bord 51 de la marche 50 qu'il faut passer.

De même, avec un tel dispositif de guidage et de roulement 12, il est possible de descendre des marches telles que 50, sans donner des à-coups importants au dispositif et à l'ensemble du robot. Dans ce cas, avantageusement, le secteur circulaire 27 possède le coin 36 en dehors de la surface cylindrique enveloppant la roulette 23.

En se reportant maintenant à la Figure 4A, celle-ci représente le dispositif de roulement 12 lorsqu'il approche d'une descente de marche 60 dont la hauteur est, par exemple, voisine de la valeur du rayon r de la roulette 23. Lorsque la roulette 23, entraînée en rotation notamment par la force exercée par les roues motrices 5 et 6, arrive au voisinage du bord 61 de la marche 60, elle enveloppe ce bord 61 jusqu'à ce que, sous l'action de sa rotation senestrorsum 62, le bord 61, dans un mouvement relatif, vienne au contact de la surface cylindrique 35 du secteur 27 en un point 63. Ce point représente, dans l'espace, l'intersection de la surface cylindrique 26 de la roulette 23 et de la surface cylindrique 35 du secteur 27, cette intersection étant située à l'arrière de la roulette 23 par rapport au sens de l'avancement 64 de la roulette 23 dans son mouvement de rotation senestrorsum 62.

A cet instant, le bord 61 de la marche vient porter sur la tranche de la surface cylindrique 35 et celle-ci, au contact de ce bord 61 et sous l'action de la poussée des roues motrices 5 et 6, entraîne le secteur 27 dans un même mouvement de rotation senestrorsum, à l'encontre de la force exercée par le ressort de traction 37 liant le secteur circulaire 27 au support 20, comme représenté sur la Figure 4B. Le robot 1 continuant à avancer, la roulette s'éloigne du bord 61 de la marche 60, la tranche 35 du secteur 27 reste en contact avec ce bord 61 de la marche 60 et l'axe de rotation 29 de ce secteur subit une rotation qui tend à le faire descendre vers la surface du sol 4, entraînant la roulette 23 solidaire du support 20.

Cette descente s'effectue lentement et sans secousse, puisque l'axe 25 de la roulette subit à la fois une translation et une rotation relativement importantes. Lorsque la roulette a atteint le sol 4 en un point relativement éloigné de la marche 60, le secteur 27 est libéré de sa force de pression sur le bord 61 et revient, sous l'action du ressort de traction 37, pour se positionner contre la butée 40, et être prêt, éventuellement, à permettre au robot de passer une nouvelle marche ou à en descendre.

Avec un dispositif tel qu'illustré notamment sur les Figures 2 à 4, un robot peut monter des marches d'une hauteur voisine du rayon de la roulette ou en descendre, et ainsi peut se déplacer sur des surfaces sur lesquelles il ne pouvait pas effectuer, jusqu'à présent, son service.

Dans ce qui a été décrit ci-dessus, il a été donné un mode de réalisation qui fournit de bons résultats. Cependant, il est bien précisé qu'un dispositif de guidage selon la présente invention pourra comporter, par exemple, deux secteurs 27 de chaque côté d'une seule roulette 23, ou bien un secteur entre deux roulettes, etc...

De plus, il est mentionné que le bord 35 du secteur 27 est circulaire. Mais, il est bien entendu que, par "circulaire", on qualifie la forme générale de ce bord, celui-ci pouvant être lisse ou même légèrement cranté, pour pouvoir bien accrocher sur les bords ou arêtes des obstacles tels des marches.

Enfin, dans ce qui a été décrit ci-dessus, le secteur a une fonction de levier pour soulever la roulette, et donc aussi le robot, pour lui faire passer la marche. Il est donc avantageux que le bras de levier soit le plus important. Dans ce cas, il est préférable que la situation de l'axe 29 soit la plus en arrière possible par rapport à l'avant 11 du robot, c'est-à-dire que la distance séparant deux plans verticaux passant respectivement par les deux axes 25 et 29 soit la plus importante possible, dans le respect, bien entendu, des caractéristiques structurelles énoncées ci-avant.

0214877

REVENDICATIONS

1. Dispositif de guidage pour un engin destiné à se déplacer sur un sol pouvant comporter des obstacles de relativement faible hauteur, CARACTERISE PAR LE FAIT QU'il comprend :

- un support (20), ledit support comportant un premier arbre (21) ayant un premier axe de rotation (22),

- au moins une roulette (23) montée rotative sur ledit support (20) au moyen d'un second arbre (24) de rotation suivant un deuxième axe (25) sensiblement perpendiculaire au dit premier axe (22), ladite roulette (23) étant associée au dit support (20) pour pouvoir coopérer par roulement sur ledit sol (4) et ayant un rayon de valeur r,

- un secteur (27) d'un disque de forme généralement sensiblement circulaire ayant un rayon de valeur R, ledit secteur (27) étant monté rotatif sur ledit support (20) au moyen d'un troisième arbre (28) suivant un troisième axe (29), ce dit troisième axe étant sensiblement parallèle au dit deuxième axe (25), la distance séparant deux plans sensiblement parallèles à la surface générale du sol et passant respectivement par lesdits deuxième et troisième axes ayant une valeur supérieure à la différence entre les deux valeurs desdits rayons R et r, la distance séparant ces deux deuxième et troisième axes étant inférieure à la valeur du rayon R dudit secteur (27), la valeur du rayon R étant au moins égale à la distance séparant le troisième axe (29) d'une droite contenue dans le plan des deux dits plans passant par ledit deuxième axe (25), d'une part, et passant par le bord de roulement (123) de ladite roulette, d'autre part, et ledit secteur ayant une valeur d'angle au centre (33) pour qu'au moins un (34) des deux coins (34, 36) du secteur définis par l'intersection des côtés (16) de l'angle au centre avec la partie circulaire (35) soit en dehors du cylindre enveloppant ladite roulette.

2. Dispositif selon la revendication 1, CARACTERISE PAR LE FAIT QUE ledit coin (34) est situé à un niveau, par rapport audit sol, ayant une valeur au moins égale à celle dudit rayon r de ladite roulette (23).

3. Dispositif selon la revendication 1, CARACTERISE PAR LE FAIT QUE l'autre coin (36) dudit secteur est en dehors dudit cylindre enveloppant ladite roulette.

4. Dispositif selon la revendication 1, CARACTERISE PAR LE FAIT QUE la position dudit deuxième arbre (24) sur ledit support (20) est le plus éloigné possible dudit premier arbre (21).

5. Dispositif selon la revendication 4, CARACTERISE PAR LE FAIT QUE les trois axes (22, 25, 29) desdits premier, deuxième et troisième arbres (21, 24, 28) sont situés respectivement dans trois plans non confondus (122, 125, 128) perpendiculaires à la surface générale du sol, le plan contenant ledit deuxième axe (25) étant situé entre les deux autres plans. **0214877**

6. Dispositif selon l'une des revendications 1 à 5, CARACTERISE PAR LE FAIT QU'Il comporte au moins deux secteurs circulaires encadrant une roulette.

7. Dispositif selon l'une des revendications 1 à 5, CARACTERISE PAR LE FAIT QU'il comporte au moins deux roulettes encadrant un secteur.

8. Dispositif selon l'une des revendications 1 à 7, CARACTERISE PAR LE FAIT QUE la surface cylindrique (35) dudit secteur (27) est lisse.

9. Dispositif selon l'une des revendications 1 à 7, CARACTERISE PAR LE FAIT QUE la partie circulaire (35) dudit secteur (27) est légèrement crantée.

10. Dispositif selon l'une des revendications précédentes, CARACTERISE PAR LE FAIT QU'il comporte des moyens pour appliquer une force élastique sur ledit secteur, de façon à tendre à le maintenir positionné contre une butée (40).

fig .1

fig. 2

0214877

fig. 3

64

62

A

35

27

63

36

23

26

35

61

60

fig.4

37

40

28

20

27

B

36

61

35

4

60

**Office européen des brevets**

**0214877**

Numero de la demande

**RAPPORT DE RECHERCHE EUROPEENNE**

EP  86 40 1556

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | US-A-3 239 872  (J.V. KITRELL) <br><br> * Colonne 3, ligne 3 - colonne 4, ligne 22; figures 1,2 * | 1,2,4, 6,8,10 | B 62 B    5/02 <br> B 60 B   33/00 |
| | --- | | |
| A | CH-A-  223 517  (REENS-VAN DER HOEFF) <br> * En entier * | 1,3,6, 8,10 | |
| | --- | | |
| A | US-A-4 494 464  (KAZUO FUJITA) | | |
| | --- | | |
| A | US-A-3 891 269  (MOESER) | | |
| | ----- | | |

| DOMAINES TECHNIQUES RECHERCHES (Int Cl 4) |
|---|
| B 60 B <br> B 62 B <br> A 61 G |

Le présent rapport de recherche a été établi pour toutes les revendications

| Lieu de la recherche | Date d'achèvement de la recherche | Examinateur |
|---|---|---|
| LA HAYE | 17-10-1986 | VALLE,D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82